# EUROPÄISCHE PATENTSCHRIFT

(11) **EP 2 719 990 B1**
(45) Veröffentlichungstag und Bekanntmachung des Hinweises auf die Patenterteilung: **11.09.2019**
(21) Anmeldenummer: 13004853.1
(22) Anmeldetag: 09.10.2013
(51) Int. Cl.: F41G 7/22, G05D 1/12, G01S 3/784

(54) **Vorrichtung zur optischen Zieleinweisung und Lenkung eines Flugkörpers**
Device for optical target assignment and guidance of a missile
Dispositif d'affectation optique de cible et de direction d'un aéronef

(30) Priorität: 11.10.2012 DE 102012019891
(43) Veröffentlichungstag der Anmeldung: 16.04.2014
(73) Patentinhaber: MBDA Deutschland GmbH, 86529 Schrobenhausen (DE)
(72) Erfinder: Schöttl, Alfred, 80809 München (DE)
(74) Vertreter: Isarpatent

(56) Entgegenhaltungen:
- EP-A1- 1 167 992
- EP-A1- 1 361 536
- US-A- 5 808 292

## Beschreibung

Die vorliegende Erfindung betrifft Flugkörper zum Transport einer Nutzlast. Insbesondere betrifft die vorliegende Erfindung einen Flugkörper mit einer vereinfachten Struktur sowie verbessertem Wiederaufschalten auf ein Zielobjekt bei Zielverlust. Weiter insbesondere betrifft die vorliegende Erfindung einen Flugkörper mit einem statischen, optischen Sensor, bei dem, zumindest in einem ersten Teilflugbereich, nur ein Teilbereich des Sensorbildes ausgelesen bzw. verarbeitet wird, wobei dieser Teilbereich des Sensorbildes dynamisch verändert werden kann.

Herkömmliche Flugkörper sind mit einem abbildenden, optischen Sensor ausgestattet. Der Sensor wird für die Zielerfassung sowie die Zielansteuerung verwendet und bestimmt somit Flugrichtung und Flugverhalten des Flugkörpers maßgeblich mit.

Ein herkömmlicher Flugverlauf besteht meist aus zwei Phasen, einer sogenannten Einweisphase sowie einer Lenkphase. In der Einweisphase wird das Zielobjekt eingewiesen, das heißt, das Zielobjekt wird im Sensorbild definiert, und die dazugehörigen Daten werden an eine Zielverfolgungseinrichtung, einen sogenannten Tracker, meist angeordnet im Flugkörper, übertragen. In der sich anschließenden Lenkphase verfolgt die Zielverfolgungseinrichtung das Zielobjekt im Sensorbild, welche Information zur Lenkung des Flugkörpers bis zum Zielobjekt verwendet wird. Die vorliegende Erfindung erhält besondere Berücksichtigung im Rahmen der Lenkphase.

Ein herkömmlicher Flugverlauf besteht meist aus zwei Phasen, einer sogenannten Einweisphase sowie einer Lenkphase. In der Einweisphase wird das Zielobjekt eingewiesen, das heißt, das Zielobjekt wird im Sensorbild definiert, und die dazugehörigen Daten werden an eine Zielverfolgungseinrichtung, einen sogenannten Tracker, meist angeordnet im Flugkörper, übertragen. In der sich anschließenden Lenkphase verfolgt die Zielverfolgungseinrichtung das Zielobjekt im Sensorbild, welche Information zur Lenkung des Flugkörpers bis zum Zielobjekt verwendet wird. Die vorliegende Erfindung erhält besondere Berücksichtigung im Rahmen der Lenkphase.

Die Einweisphase kann, je nach verwendetem Einweiseverfahren, vor oder während eines Zielanfluges erfolgen. Insbesondere bei geeigneten, vorliegenden Sichtbedingungen auf das Zielobjekt kann die Einweisphase bereits vor dem Flug erfolgen. Erfolgt die Einweisung erst während des Zielanfluges, bedingt dies meist eine Verbindung mit dem Flugkörper, beispielsweise durch Verwendung einer Funkverbindung mit einer Bedienstation am Boden oder alternativ auch ein automatische Mustererkennungsverfahren, das während des Zielanfluges bzw. eines generellen Fluges vorgespeicherte Bilder oder Strukturen mit aktuellen Bildern, aufgenommen vom optischen Sensor, vergleicht und hierdurch ein Ziel auffindet bzw. definiert.

Da während des Anfluges, aufgrund der Annäherung des Flugkörpers an das Zielobjekt Details des Zielobjektes genauer erkennbar werden, mag es sinnvoll erscheinen, auch während der Lenkphase eine Aktualisierung der Einweisung vorzunehmen. Dies kann beispielsweise von extern bei dem sogenannten Man-in-the-Loop-Verfahren unter Verwendung einer Funkverbindung durch Benutzereingriff erfolgen. Alternativ mögen Bildanalyseverfahren in einer geeigneten Recheneinheit im Flugkörper durchgeführt werden, welche aus dem, aufgrund der Annäherung an das Zielobjekt, besser aufgelösten Sensorbild eine Struktur des Zielobjektes und damit einen möglichst optimalen Zielpunkt ermitteln. Dies mag beispielsweise unter Verwendung von Mustererkennungsverfahren zur Haltepunktkorrektur erfolgen.

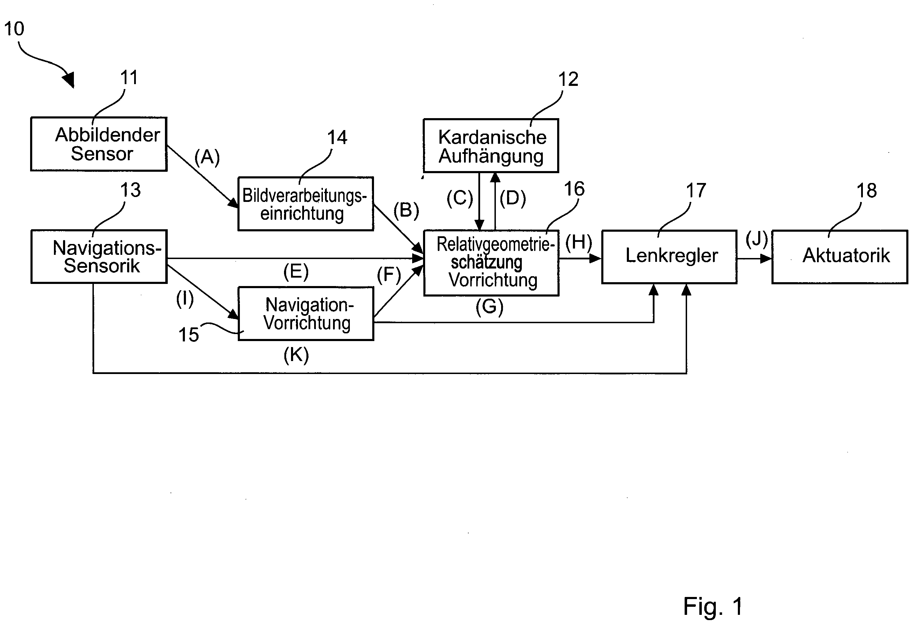

Figur 1 zeigt den funktionalen Aufbau eines herkömmlichen Flugkörpers.

Während eines Anfluges auf ein Zielobjekt regelt ein Lenkregler die Bahn des Flugkörpers. Die zugehörige Regelschleife, die den Trefffehler zu Null regeln soll, wird auch Lenkschleife genannt. Der Trefffehler ist hierbei eine Abweichung von einem gewünschten bzw. optimalen Auftreffort auf ein Zielobjekt. Flugkörperseitig umfasst die Lenkschleife eines herkömmlichen Systems 10 zumindest einen abbildenden Sensor 11 mit kardanischer Aufhängung 12, eine Navigationssensorik 13, zum Beispiel einen oder mehrere Lage-, Drehraten- oder Drehbeschleunigungssensor(en), eine Bildverarbeitungseinrichtung 14, eine Navigationsvorrichtung 15, eine Relativgeometrieschätzungsvorrichtung 16, einen Lenk- bzw. Flugzustandsregler 17 sowie Aktuatorik 18, zum Beispiel die Ruder oder Klappen. Bildverarbeitungsrichtung 14, Navigationsvorrichtung 15, Relativgeometrieschätzungsvorrichtung 16 und/oder Lenkregler 17 können hierbei funktional zur Verwendung eines Mikroprozessors ausgebildet sein oder aber unter Verwendung einzelner, diskret aufgebauter Schaltkreise realisiert sein. Eine Kombination und/oder Zusammenfassung der jeweiligen funktionalen Einheiten ist gleichfalls denkbar.

Ein Zielobjekt wird nun durch den abbildenden Sensor 11 erfasst. Herkömmliche Sensoren verwenden meist eine zweidimensionale Ausgestaltung mit z.B. 256x256 oder 512x512 Bildelementen. Dabei wird der Sensor 11 unter Verwendung der kardanischen Aufhängung in eine geeignete Lage gekippt, somit auf das Zielobjekt ausgerichtet, so dass das Zielobjekt im Sensorbild sichtbar/detektierbar ist. Das Zielobjekt im Sensorbild wird nachfolgend mit der Bildverarbeitungseinrichtung 14 getrackt.

Diese Trackingdaten, üblicherweise die Koordinaten eines ausgezeichneten bzw. definierten Punktes des Zielobjektes werden an die Relativgeometrieschätzungseinrichtung 16 übertragen, während die Daten der Navigationssensorik 13 an die Navigationsvorrichtung 15 übermittelt werden, die hieraus die Lage des Flugkörpers relativ zum Ziel schätzt. Ist die Navigationssensorik 13 direkt ein Lagesensor, so kann die Navigationsvorrichtung 15 eine vereinfachte Struktur besitzen, beispielsweise nur durch einen Tiefpassfilter realisiert sein.

Die Relativgeometrieschätzungsvorrichtung 16 bzw. Zielfilterungsvorrichtung 16 verwendet die Daten der kardanischen Aufhängung 12, des Trackers 14, der Navigationsvorrichtung 15 und evtl. der Navigationssensorik 13, um hieraus Schätzinformationen über die Geometrie, insbesondere die Weggeometrie, von der aktuellen Position des Flugkörpers zum Zielobjekt zu erhalten bzw. zu bestimmen. Meist wird dies durch eine Schätzung von erdfesten Sichtliniendrehraten, somit den Drehraten der Strecke, die einen ausgezeichneten Punkt des Flugkörpers mit einem ausgezeichneten Punkt des Zielobjektes verbindet, realisiert. Unter Filterung ist im Kontext der vorliegenden Erfindung eine Schätzung und Vorhersage aus Messdaten (hier also der Schätzung der Relativposition (also Abstand und Richtung) zwischen Flugkörper und Ziel aus den Bilddaten und den Navigationssensordaten) zu verstehen. Die klassische Filterung (z.B. Tiefpass) ist dabei nur als ein Spezialfall aufzufassen.

Die Relativgeometrieschätzungsvorrichtung 16 überträgt die Daten an den Lenkregler bzw. Flugzustandsregler 17. Weiterhin mag die Relativgeometrieschätzungsvorrichtung 16 Stellkommandos für die kardanische Aufhängung 12 ermitteln, um ein Herauslaufen des Zielobjektes aus dem Sensorbild zu verhindern. Der Lenkregler 17 verwendet die Informationen der Relativgeometrieschätzungsvorrichtung 16 sowie weitere Informationen aus der Navigationssensorik 13 und der Navigationsvorrichtung 15, um daraus Stellkommandos für die Aktuatorik 18 zu generieren. Die Aktuatorkommandos beeinflussen die reale Flugkörperbewegung und führen somit zu einer Veränderung der Bildsituation für Sensor 11 und der Bewegungssituation der Navigationssensorik 13.

Ein derart komplexer Regelkreis erfordert in bekannten Flugkörpern (zum Beispiel 10 Taurus, Pars 3LR oder IRIS-T) präzise Sensorik. Weiterhin ist eine kardanische Aufhängung meist sehr kostenintensiv, während der abbildende Sensor herkömmlich ein kostspieliger, militärischer Spezialbaustein mit relativ geringer optischer Auflösung ist. Meist findet auch ein infrarotbereichsempfindlicher Sensor Verwendung, um eine Nachtsichttauglichkeit für den Flugkörper zu realisieren.

EP 1167 992 A1 beschreibt eine Einrichtung zum Orten eines Objekts mit einem optischen Detektor bestehend aus einem Bildaufnahmemittel, das Bilder von der Umgebung des Objekts erzeugen kann, und einer Bildbearbeitungseinheit, die das Objekt auf den durch das Bildaufnahmemittel erzeugten Bildern erkennen und orten kann, und ein Gyrometer, das einen Richtungsänderungswinkel des optischen Detektors messen kann. Die Einrichtung zum Orten eines Objekts kann in einem Panzer eingebaut werden, um die Lenkung eines Flugkörpers zu ermöglichen.

EP 1 361 536 A1 beschreibt ein Verfahren zum Extrahieren eines beleuchteten Bereichs aus einer Matrix von Bildsensoren einer Lichtdetektionsvorrichtung. Die Matrix wird unterteilt in eine Vielzahl von Suchbereichen, welche nacheinander darauf untersucht werden, ob ein Bildsensor in einem aktiven Zustand ist. Sämtliche Suchbereiche werden untersucht, um alle aktiven Bildsensoren zu erhalten, welche dann einem beleuchteten Bereich eines Zielgebiets entsprechen.

US 5,808,292 A beschreibt ein Erfassungs- und Zielverfolgungssystem mit einem Array von Sensoren, einer Steuereinheit und einer Linsenanordnung. Die Steuereinheit ist ausgeführt, zumindest einen Sensor aus dem Sensorarray auszuwählen und die Daten von diesem ausgewählten Sensor weiter zu verarbeiten. Dadurch wird die Menge der zu verarbeitenden Informationen reduziert.

Ein Aspekt der vorliegenden Erfindung besteht in der vereinfachten mechanischen Ausgestaltung und damit einer möglicher Kostenreduzierung für erfindungsgemäße Flugkörper.

Demgemäß wird ein Flugkörper zum Transport einer Nutzlast gemäß dem unabhängigen Anspruch angezeigt, aufweisend einen optischen Sensor zur Erfassung und Ansteuerung eines Zielobjektes, eine Flugantriebseinheit zur Beeinflussung einer Flugbahn des Flugkörpers und eine Recheneinheit zur Bildverarbeitung und Flugsteuerung eines Flugkörpers, wobei der optische Sensor in Bezug auf den Flugkörper unbeweglich ausgebildet ist, wobei der optische Sensor zur Ausbildung eines Sensorbildes mit einer definierten Anzahl an Bildelementen eingerichtet ist, wobei zumindest zur ein Teilbereich des Sensorbildes ausgelesen wird und wobei der Teilbereich des Sensorbildes veränderbar bzw. im Sensorbild beweglich ausgebildet ist, wobei der Flugkörper eingerichtet ist, eine Mehrzahl an Bildelementen gemeinsam auszuwerten bzw. zusammenzuschalten, insbesondere zur Erhöhung der Lichtempfindlichkeit bzw. Reduzierung der Integrationszeiten der Bildelemente und wobei das Zusammenschalten bzw. die gemeinsame Auswertung der Mehrzahl an Bildelementen bei Unterschreiten einer definierten Zielentfernungsgrenze erfolgt. Bevorzugte Ausgestaltungen ergeben sich aus den abhängigen Ansprüchen.

Im weiteren werden Aspekte des vorliegenden Erfindung unter Bezugnahme auf einen Flugkörper zum Transport einer Nutzlast beschrieben. Diese Ausführungen greifen jedoch ebenso bei exemplarischen Ausgestaltungen eines Verfahren zum Tracking eines Zielobjektes eines Flugkörpers gemäß der vorliegenden Erfindung.

Erfindungsgemäß wird auf eine kardanische Aufhängung des abbildenden Sensors verzichtet, dieser wird vielmehr fest in den Flugkörper verbaut. Zusätzlich mag der abbildende Sensor im Vergleich zu einem herkömmlichen Flugkörper mit einem weitwinkligen Objektiv ausgestattet sein. Bevorzugt wird der abbildende Sensor eine hohe Auflösung, zum Beispiel 1024x1024, 2048x2048 oder auch 4096x4096 Bildelemente verwenden. Dabei muss ein Sensor nicht zwingend, kann jedoch bevorzugt, identische Pixelanzahlen in vertikaler und horizontaler Richtung aufweisen. Ein Sensor mit einer derartig hohen Auflösung mag jedoch eine reduzierte Lichtempfindlichkeit aufweisen, welche möglicherweise durch höhere Integrationszeiten bzw. Belichtungszeiten ausgeglichen werden muss. Aufgrund der höheren Integrationszeit mögen Verwischungseffekte verstärkt auftreten, welche wiederum zu einem Trackverlust führen können.

Ausgelesen aus dem Sensorbild, das dem "Field of Regard (FoR)", der Szene, somit dem Betrachtungsbild entspricht, wird nur ein Teilbereich, beispielsweise ein kleinerer, rechteckiger Teilbereich, das sogenannte "Field of View" (FoV) ausgelesen. Anstelle der Drehung eines Sensors durch eine kardanische Aufhängung wird nun die Position des Field of View im Field of Regard verschoben. Da die Verschiebung des Field of View rein digital erfolgt, entspricht die kommandierte Field of View Position der realisierten Position, eine Messung der realisierten Position und eine Rückmeldung können somit entfallen. Mit anderen Worten, wird durch eine mechanische Einrichtung die Kamera gedreht, so ist eine gute Präzision meist nur über einen Regelkreis zu erreichen, wenn also die realisierten physikalischen Winkel gemessen werden und an einen Regler zurückgemeldet werden, der die noch bestehenden Abweichungen vom kommandierten Winkel ausgleicht. Diese Rückmeldung ist ein Datentransfer vom Messaufnehmer zu einer Regeleinrichtung (typischerweise) in einem Computer.

Im Falle von ausreichender Rechenleistung und insbesondere ausreichend schneller Bildauslesefrequenz mag die Beschränkung der Auswertung des Field of Regard auf das Field of View auch entfallen.

Erfindungsgemäß können als Drehratensensoren neben herkömmlich bekannten, konventionellen Sensoren bzw. Kreiselsensoren, zum Beispiel faseroptische Kreisel, auch sogenannte Micro-Electro-Mechanical-Systems (MEMS) Sensoren Verwendung finden, deren Genauigkeit für eine Relativgeometrieschätzung ausreichen mag.

Die Relativgeometrieschätzung/Zielfilterung wird im Vergleich zu einer herkömmlichen Lösung dahingehend modifiziert, dass der Aufhängungswinkel des Sensors in der kardanischen Aufhängung nicht berücksichtigt werden muss. Als weiteres Signal kann jedoch das Vorliegen eines Trackverlustes an einen Lenk- /Zustandsregler übermittelt werden.

Ein Trackverlust durch Herauslaufen des Ziels aus dem Sensorbild ist bei herkömmlichen Implementierungen von Lenkgesetzen nicht vorgesehen und führt regelmäßig zu einem Missionsabbruch bzw. Fehlschuss. Da die Wahrscheinlichkeit für das Auftreten eines Trackverlustes, zum Beispiel durch Herauslaufen des Zielobjektes aus dem Field of Regard im Vergleich zu einer herkömmlichen Realisierung eines Flugkörpers erhöht sein mag, werden erfindungsgemäß umschaltbare Lenkgesetze vorgesehen. Herkömmlich sind umschaltbare Lenkgesetze ausschließlich für einen Missionsabbruch (mission abort) oder aber für eine Alternativzielzuweisung vorgesehen, somit eine Zielumschaltung, wenn das eigentlich Zielobjekt nicht aufgefasst werden kann oder alternativ nicht mehr bekämpft werden darf.

Bei einem Trackverlust besteht auch die Möglichkeit, durch Schwenken des Suchkopfes in Form eines Suchmusters, zum Beispiel spiralförmig, ein (Wieder-) Auffinden des Zieles zu begünstigen. Dies kann erfindungsgemäß realisiert werden durch dynamische Veränderung des Field of View im Field of Regard gemäß einem vorgegebenen Suchmuster. Eine im Vergleich zu einer kardanischen Aufhängung schnellere Durchführung des Suchmusters begünstigt hierbei das Wiederauffinden des Zielobjektes im Vergleich zu herkömmlichen Flugkörpern. Insbesondere kann eine derartige Suchmusterfunktion auch bei Zielabständen erfolgen, welche bei herkömmlichen Flugkörpern erfolglos wäre. So lässt sich bei den erfindungsgemäßen Flugkörpern ein Missionsabbruch bzw. der Zwang zum Umschalten auf ein Zweit- bzw. Alternativziel vermeiden.

Im Weiteren kann eine Prädiktionsfunktionalität in der Relativgeometrieschätzungsvorrichtung unter Verwendung der Navigationssensorik sowie den bisherigen bzw. aktuellen Trackdaten implementiert werden, welche das Wiederauffinden des Zielobjektes, somit das Wiederaufsetzen des Trackers auf das Zielobjekt nach Trackverlust begünstigt. Wird beispielsweise der Flugkörper in einem Zielobjektanflug von einer Windböe erfasst und somit von seiner geplanten Flugbahn derart abgebracht, so dass das Zielobjekt aus dem Field of View oder schlimmstenfalls aus dem Field of Regard verschwindet, so lässt sich unter Verwendung der bisherigen Trackingdaten sowie Informationen der Navigationssensorik bezüglich des Flugbahnversatzes durch die Windböe unter Verwendung der Prädiktionsfunktionalität eine Abschätzung durchführen, wo außerhalb des Field of View bzw. Field of Regard das Zielobjekt nun wahrscheinlich angeordnet ist, so dass diese Informationen eine Relativgeometrieschätzung zwischen Flugkörper und Zielobjekt ermöglichen, ohne dass das Zielobjekt (aktuell) im Sensorbild vorliegt. Aufgrund der Prädiktionsfunktionalität kann nun der Flugkörper derart gelenkt werden, so dass der wahrscheinliche Aufenthaltsbereich des Zielobjektes wieder in das Field of Regard bzw. Field of View des Sensorbildes gebracht wird. Nachdem das Zielobjekt dort wieder erkennbar ist, kann der Tracker wieder auf das Ziel aufschalten und eine neue Flugbahn über eine aktualisierte Relativgeometrieberechnung bestimmen.

Erfindungsgemäß sind weiterhin umschaltbare Lenkregelungsmodi bzw. Flugzustandsregelmodi vorgesehen, die zwischen den Kriterien der Trefffehlerminimierung und der Erhöhung der Wiederaufschaltwahrscheinlichkeit umschalten können. Typisch für einen Flugzustandsregelmodus mit dem Ziel der Erhöhung der Wiederaufschaltwahrscheinlichkeit ist zum Beispiel eine Reduktion der rotatorischen Dynamik des Flugkörpers zur Vermeidung von Blurring-Effekten auf dem Bildsensor, somit zur Vermeidung von Bildverschmierungen, erfolgt um die prädi- zierte Zielposition wieder in das Field of Regard, somit das Zielobjekt wieder in das Sensorbild zu stellen, wobei eine initiale Bewegungs- bzw. Kurskorrektur mit einer eventuell erhöhten Rotationsgeschwindigkeit vorausgehen kann, welche nachfolgend das Flugverhalten mit reduzierter rotatorischer Dynamik ermöglicht.

In anderen Worten wird ein Flugverhalten mit einer bestimmten rotatorischen Dynamik derart verändert, so dass nach einer kurzfristig über diese rotatorische Dynamik erhöhte Rotation, zumindest für einen gewissen Zeitraum ein Flugverhalten mit einer verringerten rotatorischen Dynamik eingehalten werden kann. Ein derartiges Flugverhalten mag im Weiteren auch als initiale Überkompensation bezeichnet werden.

Erfindungsgemäß mögen Blurring-Effekte auch dadurch vermieden werden, dass eine dynamische Zusammenschaltung von Bildelementen zur Erhöhung der Lichtempfindlichkeit erfolgt. Beispielsweise mag bei vergleichsweise großer Zielentfernung eine hohe Auflösung des Sensors zur Zielerkennung und Verfolgung erforderlich sein. Da das Field of View nun einen relativ großen Bereich um das Zielobjekt abzudecken vermag, ist die Wahrscheinlichkeit hoch, auch bei widrigen Lichtverhältnissen noch eine Szene bzw. ein Bildobjekt mit geeignetem Kontrast vorzufinden, welche zur groben Ansteuerung des Zielbereichs verwendet werden kann. Weiterhin ist die translatorische Dynamik der Relativgeometrie auch bei großen Zielentfernungen gering, ein Versatz des Flugkörpers durch zum Beispiel Windeinflüsse oder eine Bewegung des Zielobjektes führen nur zu einer relativ kleinen Änderung der Sichtlinie bzw. Verschiebung des Zielobjektes im Field of View.

Im weiteren Verlauf der Annäherung an das Zielobjekt wird der Bereich der Szene im Field of View jedoch immer größer, die Dynamik (der Veränderung) der Sichtlinie und damit die Wahrscheinlichkeit von Blurring-Effekten mag jedoch als ansteigend angenommen, Z.B. bei Vorliegen eines zufälligen Zielmanövers, werden. Durch Zusammenschalten benachbarter Bildelemente bzw. Pixel mag die Lichtempfindlichkeit des Sensors zum Preis einer geringeren Auflösung weiter erhöht werden, wobei eine hohe Auflösung jedoch in einer relativen Nähe zum Zielobjekt möglicherweise nicht mehr benötigt wird. Das Zusammenschalten der Bildelemente kann hierbei bereits auf der Stufe des Auslesens des Sensorelementes erfolgen oder aber nachfolgend bei der Bildverarbeitung realisiert werden. Auch hier mag ein enges Zusammenspiel von Tracking, Relativgeometrieschätzung/Zielfilterung und Lenk-/Flugzustandsregler erforderlich sein.

Anstatt eines direkt getrackten Zielobjektes kann auch eine anzufliegende objektlosgelöste Zielposition verwendet werden, wodurch andere Anflugmodi, beispielsweise der Überflug über das getrackte Objekt, ermöglicht werden.

Wenn im Rahmen der vorliegenden Erfindung von einem Zielverlust des Zielobjektes durch den Flugkörper gesprochen wird, so ist dadurch insbesondere ein Verschieben der optischen Abbildung des Zielobjektes aus dem Field of View bzw. aus dem Field of Regard zu verstehen, so dass die Recheneinheit des Flugkörpers (zunächst) keine direkte optische Information zum Zielobjekt mehr zur Verfügung hat.

Nachfolgend wird anhand der beigefügten Zeichnungen näher auf exemplarische Ausführungsbeispiele der vorliegenden Erfindung eingegangen.

Die Figuren sind dabei nicht maßstabsgetreu, können jedoch qualitative Größenverhältnisse darstellen.

Bezugszeichen in den Figuren sind nicht als einschränkend aufzufassen.

Es zeigen:
- **Fig.1**: ein Funktionsdiagramm eines Flugkörpers;
- **Fig.2**: eine exemplarische Ausgestaltung eines Funktionsdiagramms eines Flugkörpers gemäß der vorliegenden Erfindung; und
- **Fig.3**: eine exemplarische Ausgestaltung eines Flugkörpers gemäß der vorliegenden Erfindung; und
- **Fig.4**: eine exemplarische Ausgestaltung eines Verfahren zum Tracking eines Zielobjektes eines Flugkörpers.

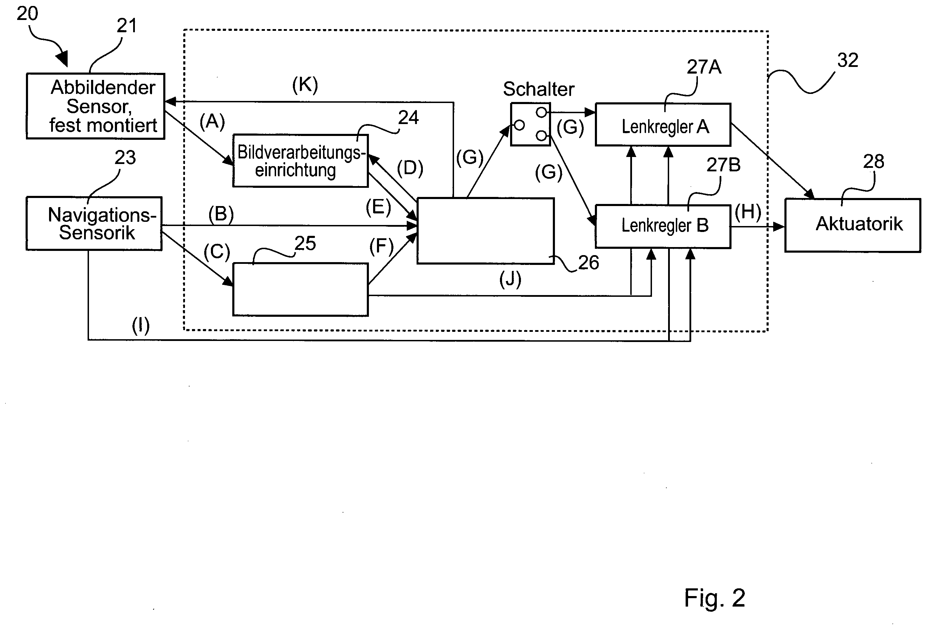

Figur 2 zeigt eine exemplarische Ausgestaltung eines Funktionsdiagramms eines Flugkörpers gemäß der vorliegenden Erfindung.

Im Vergleich zu Figur 1 zeigt Figur 2 die direkte Anbindung des abbildenden Sensors 21, insbesondere ohne die Verwendung einer kardanischen Aufhängung. Vielmehr ist der abbildende Sensor 21 fest im Flugkörper montiert und damit unbeweglich, insbesondere während des Fluges nicht schwenkbar.

Der abbildende Sensor 21, bestehend bevorzugt aus einem Pixel-Array, beispielsweise 1024x1024; 2048x2048; 4096x4096 und entspricht insbesondere einem herkömmlichen 1:1 Bildsensor, und liefert ein Abbild des Sichtbereiches im Wesentlichen in Flugrichtung des Flugkörpers. Die Bildbearbeitungseinrichtung 24 erhält Informationen des abbildenden Sensors 21, welche entweder einem Teilbild FOV des abbildenden Sensors 21 entsprechen mögen oder auch von jedem einzelnen Bildelement 37.

Der abbildende Sensor 21 kann dergestalt ausgebildet sein, auf Anweisung einer Recheneinheit 32 eine Mehrzahl von insbesondere benachbarten Bildelementen 37 zusammenzuschalten bzw. aufzusummieren, um insbesondere eine Integrationszeit zu erniedrigen bzw. eine Lichtempfindlichkeit einer solchen Pixelgruppe zu erhöhen. Dieses Sensorbild FOR bzw. Teilbild FOV wird an die Bildverarbeitungseinrichtung 24 weitergeleitet und dort ausgewertet. Auch die Bildverarbeitungseinrichtung 24 kann eingerichtet sein, eine Summierung benachbarter Pixel wie zuvor beschrieben vorzunehmen.

Eine im Flugkörper vorgesehene Navigationssensorik 23, beispielsweise MEMS-Sensoren, liefern Drehrateninformationen des Flugkörpers an die Relativgeometrieschätzungsvorrichtung 26 und/oder die Navigationsvorrichtung 25. Diese wiederum kann Navigationsdaten, zum Beispiel eine erdfeste Lage, an die Relativgeometrieschätzungsvorrichtung 26 weiterleiten. Während die Bildverarbeitungseinrichtung 24 Informationen zur Position des Zielobjektes im Bild, Status und Güte eines Trackings an die Relativgeometrieschätzungsvorrichtung 26 weiterleiten mag, kann diese unter Verwendung einer Bildverarbeitungseinrichtung 24 einen Teilbereich FOV des Sensorelementes 21 einstellen bzw. anfordern, was letztendlich der kommandierten Position des FOV entspricht. Unter Güte mag im Rahmen der vorliegenden Erfindung einerseits eine Güte des Ergebnisses der Bildverarbeitung und andererseits eine Güte des Ergebnisses der Relativgeometrieschätzung verstanden werden. Dabei kann die Güte der Relativgeometrieschätzung von der Güte der Bildverarbeitung abhängig sein.

Gleichzeitig kann ein flugkörperfester Sichtlinienwinkel oder dergleichen, eine Entfernung zum Ziel oder dergleichen an die Bildverarbeitungseinrichtung 24 weitergegeben werden. Diese kann daraufhin entweder ein geeignetes FOV auswählen bzw., zum Beispiel abhängig von der Entfernung zum Ziel, insbesondere von der Unterschreitung einer definierten Zielentfernung eine Zusammenschaltung von Bildelementen veranlassen.

Die beiden in Figur 2 dargestellten Lenkregler 27A und 27B stellen exemplarisch zwei unterschiedliche Flugmodi dar. Beide Lenkregler 27A,B erhalten jeweils Navigationsdaten sowohl von der Navigationssensorik 23 und der Navigationsvorrichtung 25 sowie Relativdaten zum Zielobjekt, insbesondere Sichtliniendrehraten und dem Status und/oder der Güte eines Schätzergebnisses der Relativgeometrieschätzungsvorrichtung 26. Basierend auf diesen Relativdaten, zum Beispiel Sichtliniendrehraten und Status und/oder Güte der Schätzdaten, kann unter Verwendung eines Schaltelementes 29 einer der beiden Lenkregler 27A,B ausgewählt werden, welcher im Rahmen seiner Parameter die Aktuatorik 28 beeinflusst bzw. kommandierte Stellwerte an diese weiterleitet und hierüber den Flug des Flugkörpers beeinflusst. Die einzelnen Elemente der Abbildung 2, obwohl dort diskret dargestellt, können auch gemeinsam in geeigneter Weise und Funktionalität kombiniert werden. Insbesondere die Bildverarbeitungseinrichtung 24, die Navigationsvorrichtung 25, die Relativgeometrieschätzungsvorrichtung 26 und Lenkregler 27A,B zusammen mit Schaltelement 29 können in einer elektronischen Recheneinheit 32 vorgesehen sein. Nachfolgend werden weitere Details zu den einzelnen Elementen gemäß Abbildung 2 beschrieben, insbesondere eine sich daraus ergebende modifizierte Lenkschleife.

Das Zielobjekt wird durch den abbildenden Sensor 21 aufgenommen, dieser ist dabei fest montiert. Durch eine vergleichsweise, insbesondere im Vergleich zu herkömmlichen Flugkörpern, hohe Auflösung und ein vergleichsweise weitwinkliges Objektiv, welches in Figur 2 nicht separat dargestellt ist, wird ein großer Sichtwinkel, somit ein großes Field of Regard erzielt. In diesem darf sich das Zielobjekt befinden, um trackbar zu sein. Um insbesondere eine schnelle und vergleichsweise kostengünstige Bildverarbeitung durchführen zu können, wird lediglich ein Teilbereich des Field of Regard, beispielsweise ein rechteckiger Teilbereich, ein sogenanntes Field of View ausgelesen und ausgewertet. Bei ausreichend hoher Verarbeitungsgeschwindigkeit und Speicherkapazität, insbesondere der Recheneinheit 32, kann das Field of Regard auch dem Field of View entsprechen.

Das Objekt im FoV wird mithilfe der Bildverarbeitungseinrichtung 24 getrackt; die Trackingdaten, üblicherweise abgebildet als Koordinaten eines ausgezeichneten Punkts des Zielobjektes, werden an die Relativgeometrieschätzungsvorrichtung 26 übertragen. Gleichfalls wird der Status des Trackings an die Bildverarbeitungseinrichtung weitergegeben, beispielsweise als unterschiedliche Modi "Lock on", "Trackingverlust" oder spezifische Bildverarbeitungsqualitätsmerkmale.

Die Daten der Navigationssensorik 23 werden an die Navigationsvorrichtung 25 übermittelt, die hieraus zumindest die Lage des Flugkörpers schätzt. Ist die Navigationssensorik 23 direkt ein Lagesensor, so kann die Navigationsvorrichtung 25 eine einfache Struktur besitzen, beispielsweise nur als ein Tiefpassfilter ausgebildet sein. In einer anderen Ausführung mögen auch weitere Flugkörperbewegungsdaten wie Geschwindigkeit und Position geschätzt bzw. ermittelt werden.

Die Relativgeometrieschätzungsvorrichtung/Zielfilterungsvorrichtung 26 nutzt die Daten der Bildverarbeitungseinrichtung 24, der Navigationsvorrichtung 25 und gegebenenfalls der Navigationssensorik 23, um hieraus Schätzinformationen über die Relativgeometrie und Relativkinematik zwischen Flugkörper 20 und Zielobjekt zu erhalten. Hierbei wird einer Lenkvorrichtung eine Schätzung der erdfesten Sichtliniendrehrate bereitgestellt, also der Drehraten der Flugstrecke, die einen definierten Punkt des Flugkörpers, beispielsweise die Flugkörperspitze, mit einem definierten bzw. ausgezeichneten Punkt des Zielobjektes verbindet. Alternativ oder zusätzlich können andere Relativgeometriegrößen ausgegeben werden, beispielsweise ein erdfester Sichtlinienwinkel, eine Relativgeschwindigkeit oder Beschleunigung bzw. eine Information über ein Zielmanöver, beispielsweise Bewegungsinformationen des Zielobjektes.

Die Relativgeometrieschätzungsvorrichtung/Zielfilterungsvorrichtung 26 mag auch ein Modell bzw. Informationen bezüglich der Bewegung des Zielobjektes berücksichtigen. Im einfachsten Fall ist das Zielobjekt ein stehendes bzw. (momentan) unbewegtes Ziel, alternativ kann die Zielbewegung oder Aspekte der Zielbewegung geschätzt werden, insbesondere mithilfe vorangegangener Trackingdaten, die nicht nur eine Relativbewegung des Flugkörpers, beispielsweise im Vergleich zur Erdoberfläche, sondern relativ dazu auch eine Bewegung des Zieles berücksichtigen können. Die Relativgeometrieschätzungsvorrichtung/Zielfilterungsvorrichtung 26 kommandiert auch die Position des FoV im FoR des Sensors 21, um ein Herauslaufen des Zielobjektes aus dem FoV bestmöglich zu unterbinden. Kommandieren bedeutet in diesem Zusammenhang, dass die Position des FoV im FoR bestimmt bzw. angewiesen wird und damit letztendlich bestimmt wird, welche Bildelemente 37 des Sensors 21 das FoV darstellen bzw. ergeben.

Weiterhin mag beispielsweise ein Offset zwischen dem getrackten Zielpunkt und dem tatsächlich anzufliegenden Punkt berücksichtigt werden, um andere Anflugmodi realisieren zu können. Beispielsweise mag hierdurch ein Überflug über das Ziel planbar bzw. durchführbar sein. In einem solchen Fall mögen sich die anzugebenden Sichtliniendrehraten auf die Relativgeometrie zwischen Flugkörper und dem tatsächlich anzufliegenden Punkt und nicht auf das Zielobjekt selbst beziehen.

Im Falle eines Trackingverlustes, beispielsweise wenn das Zielobjekt aufgrund unvorhergesehener Vorkommnisse das Field of Regard verlässt, mag die Relativgeometrieschätzungsvorrichtung/Zielfilterungsvorrichtung 26 unter Verwendung vorliegender Zielbewegungsmodelle, der Navigationsdatenvorrichtung 25 sowie eventuell der Navigationssensorik 23 eine geschätzte Zielobjektposition relativ zum Flugkörper 20 an die Bildverarbeitungseinrichtung 24, etwa in Form von geschätzten flugkörperfesten Sichtlinienwinkeln oder dergleichen, weitergeben. Unter Verwendung dieser Informationen mag das Wiederaufsetzen des Trackers der Bildverarbeitungseinrichtung 24 unterstützt werden.

Ein solcher Trackverlust mag im Weiteren auch dem Lenk-/Flugzustandsregler 27A,B mitgeteilt werden, insbesondere Informationen bezüglich einer geschätzten Zielobjektposition, insbesondere außerhalb des FoR. Somit kann der Lenkregler 27A,B veranlasst werden, eine entsprechende Kurskorrektor unter Verwendung der Aktuatorik 28 vorzunehmen. Gleichzeitig weiß die Bildverarbeitungseinrichtung 24, in welchem Bereich des abbildenden Sensors 21, somit in welchem Bereich des FoR das Zielobjekt nach erfolgter Kurskorrektur wieder erscheinen mag, um hierdurch einen geeigneten FoV vorauszuwählen.

Alternativ mag die Relativgeometrieschätzungsvorrichtung/Zielfilterungsvorrichtung 26 eine geschätzte Entfernung zum Ziel an die Bildverarbeitungseinrichtung 24 bzw. den Sensor 21 weitergeben. Bei Unterschreiten einer definierten (oberen) Zielentfernungsgrenze können somit mehrere Pixel, entweder auf Sensorebene oder auf Bildverarbeitungsebene, zusammengeschaltet werden, um die Lichtempfindlichkeit des Sensors 21 zu erhöhen.

Gegebenenfalls kann das Wiederaufschalten des Trackings auf das Zielobjekt nach Trackverlust durch Änderung des Lenk-/Flugzustandsreglerverhaltens oder der Lenk-/Flugzustandsreglerparameter begünstigt werden. So kann beispielsweise eine Umschaltung auf ein ruhigeres Flugverhalten Unschärfen im Bild, sogenannte Blurring-Effekte, vermeiden helfen, oder durch ein ruckartiges Manöver vor einer ruhigeren Phase mag das Ziel wieder in das Field of Regard gebracht werden. Eine Umschaltung der Lenkregler 27A,B mag somit in Abhängigkeit von Status bzw. Güte der Relativgeometrieschätzung erfolgen. In anderen Ausführungen wird auf den Schalter 29 und zusätzliche Lenkregler verzichtet. Eine Umschaltung mag jedoch auch genutzt werden, um zum Beispiel eine Aktion zum Flugabbruch, zum Beispiel ein gezielter Absturz, einzuleiten bzw. die Flugbahn des Flugkörpers derart zu ändern, um auf ein anderes Ziel einzuschwenken.

Statt eines diskreten Umschaltens von Lenkregler 27A zu Lenkregler 27B und umgekehrt kann auch eine kontinuierliche Lenk/Flugzustandsreglerparameteränderung, insbesondere abhängig von Status bzw. Güte der Relativgeometrieschätzung, realisiert werden. Schaltelement 29 kann auch softwareseitig ausgeführt werden dergestalt, dass die Parameter zur Ansteuerung eines, insbesondere einzelnen, Lenkreglers entsprechend geändert werden.

Der oder die Lenk-/Flugzustandsregler 27A,B, welche in Figur 2 exemplarisch als zwei Flugzustandsregler ausgeführt sind, nutzt/nutzen die Informationen der Relativgeometrieschätzungsvorrichtung 26 sowie eventuell weitere Informationen der Navigationssensorik 23 und der Navigationsvorrichtung 25, um daraus Stellkommandos für die Aktuatorik 28 zu bilden. Statt mehrerer Lenk-/Flugzustandsregler kann auch nur ein Lenk-/Flugzustandsregler oder aber ein Lenk- /Flugzustandsregler mit der Möglichkeit der dynamischen Änderung von Lenk/Flugzustandsreglerparametern verwendet werden. Eine Mehrzahl, insbesondere mehr als zwei Lenkregler 27 sind ebenfalls denkbar.

Im Falle eines Trackingverlustes werden der Lenkung statt der auf den Bilddaten basierenden Informationen Schätzdaten der Relativgeometrieschätzungsvorrichtung/Zielfilterungsvorrichtung 26 übermittelt. Diese Schätzdaten spiegeln eine wahrscheinliche Position des nicht mehr im FoR befindlichen Zielobjektes relativ zum Flugkörper wider.

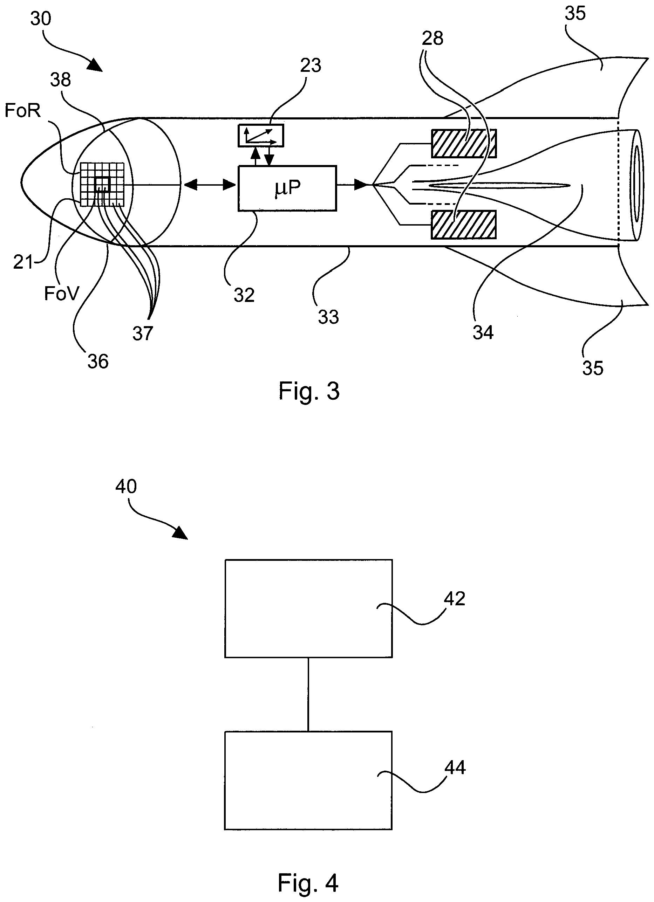

Weiter Bezug nehmend auf Figur 3 wird eine exemplarische Ausgestaltung eines Flugkörpers gemäß der vorliegenden Erfindung dargestellt.

Flugkörper 30 weist hierbei einen Flugkörperkopf 36, einen langgezogenen Flugkörperkörper bzw. Gehäuse 33 auf. Flugkörper 30 weist eine Flugantriebseinheit 34, beispielsweise einen herkömmlichen, bekannten Raketenantrieb auf. Ein Leitwerk 35 stabilisiert den Flug des Flugkörpers 30. Aktuatorelemente 28 sind vorgesehen, um eine Flugbahnänderung zu ermöglichen. Die einzelnen diskreten Elemente der Figur 2 sind in Figur 3 exemplarisch in einer Recheneinheit 32 zusammengelegt und somit in Software abgebildet. Gleichfalls ist die diskrete, hardwaremäßige Implementation der einzelnen funktionalen Elemente der Figur 2 denkbar.

Ein Sensorelement 21, bestehend aus einer Mehrzahl an Bildelementen 37, ist in Figur 3 dargestellt. Exemplarisch weist Sensor 21 6x6 Bildpunkte 37 auf. Diese Gesamtanzahl an Bildpunkten stellt das FoR bzw. Field of Regard dar. Exemplarisch werden aus dem FoR vier Bildelemente 37 ausgewählt, welche das FoV darstellen.

Die Sensordaten werden an die Recheneinheit 32 weitergeleitet, welche ebenfalls einen Navigationssensor 23, beispielweise einen Lagesensor oder einen Drehratensensor, angebunden aufweist. Dieser mag Informationen bezüglich der Bewegung bzw. Flugbahn des Flugkörpers an die Recheneinheit 32 weiterleiten. Die zuvor beschriebenen Operationen zur Bestimmung bzw. Veränderung des Flugverhaltens werden von der Recheneinheit 32 ausgeführt, welche mit den Aktuatoren 28 auf geeignete, bekannte Weise verbunden ist, um diese anzusteuern.

Die Recheneinheit 32 kann an den Sensor 21 Informationen senden, welche Bildelemente 37 aktuell das FoV darstellen sollen, so dass der Sensor 21 ausschließlich diese Informationen an die Recheneinheit 32 weitergibt. Auch kann der Sensor 21, je nach Ausgestaltung der Recheneinheit 32, die gesamten Bildinformationen der Bildelemente 37 an die Recheneinheit 32 weitergeben, wobei die Auswahl des FoV aus dem FoR durch die Recheneinheit 32 erfolgt. Eine Zusammenschaltung von Bildelementen 37 kann, insbesondere gesteuert von Recheneinheit 32, im Sensor 21 erfolgen oder aber auch direkt als Bildverarbeitungsschritt in der Recheneinheit 32.

Weiter bezugnehmend auf Fig. 4 wird eine exemplarische Ausgestaltung eines Verfahrens 40 zum Tracking eines Zielobjektes eines Flugkörpers dargestellt, aufweisend die Schritte vorsehen 42 eines optischen Sensors, der in Bezug auf den Flugkörper unbeweglich ausgebildet ist, wobei der optische Sensor zur Ausbildung eines Sensorbildes FoR mit einer definierte Anzahl an Bildelementen eingerichtet ist und auslesen 44 zumindest nur eines Teilbereichs FoV des Sensorbildes FoR, wobei der Teilbereich des Sensorbildes veränderbar bzw. einstellbar ausgebildet ist.

### Bezugszeichenliste

- 10: Flugkörper
- 11: Sensor
- 12: kardanische Aufhängung
- 13: Navigationssensorik
- 14: Bildverarbeitungseinrichtung
- 15: Navigationsvorrichtung
- 16: Relativgeometrieschätzungsvorrichtung
- 17: Lenkregler
- 18: Aktuatorik
- 20: Flugkörper
- 21: Sensor
- 23: Navigationssensorik
- 24: Bildverarbeitungseinrichtung
- 25: Navigationsvorrichtung
- 26: Relativgeometrieschätzung
- 27A,B: Lenkregler
- 28: Aktuatorik
- 29: Schaltelement
- 30: Flugkörper
- 32: Recheneinheit
- 33: Flugkörpergehäuse
- 34: Flugantriebseinheit
- 35: Leitwerk
- 36: Flugkörperkopf
- 37: Bildelemente
- 38: Optik
- 40: Verfahren zum Tracking eines Zielobjektes eines Flugkörpers
- 42: Vorsehen eines optischen Sensors
- 44: Auslesen zumindest nur eines Teilbereichs des Sensorbildes

### Fig. 1:

(A) : Bilddaten
(B) : Position des Objekts im Bild
(C) : gemessene Winkel der kardanischen Aufhängung
(D) : kommandierte Winkel der kardanischen Aufhängung
(E) : Navigationssensordaten
(F) : Navigationsdaten z.B. erdfeste Lage
(G) : Navigationsdaten z.B. erdfeste Lage
(H) : Relativdaten zum Ziel z.B. Sichtliniendrehraten
(I) : kommandierte Stellwerte der Aktuatoren
(J) : Navigationssensordaten
(K) : Navigationssensordaten

### Fig. 2:

(A) : Teilbilddaten (FOV)
(B) : Navigationssensordaten
(C) : Navigationssensordaten
(D) : kommandierte Position des FOV, flugkörperfeste Sichtlinienwinkel u/o Entfernung zum Ziel
(E) : Position des Objekts im Bild, Status bzw. Güte des Bildes u/o der Bildverarbeitung
(F) : Navigationsdaten (z.B. erdfeste Lage)
(G) : Relativdaten zum Ziel (z.B. Sichtliniendrehraten, Status u/o Güte der Relativdatenschätzung, ggf. abhängig von der Bildverarbeitungsgüte)
(H) : kommandierte Stellwerte der Aktuatoren
(I) : Navigationssensordaten
(J) : Navigationsdaten, (z.B. erdfeste Lage)
(K) : Entfernung zum Ziel

## Patentansprüche

1. Flugkörper (20) zum Transport einer Nutzlast, aufweisend
einen optischen Sensor (21) zur Erfassung und Ansteuerung eines Zielobjektes;
eine Flugantriebseinheit (34) zur Beeinflussung einer Flugbahn des Flugkörpers; und
eine Recheneinheit (32) zur Bildverarbeitung und Flugsteuerung des Flugkörpers;
wobei der optische Sensor in Bezug auf den Flugkörper unbeweglich ausgebildet ist;
wobei der optische Sensor zur Ausbildung eines Sensorbildes (FoR) mit einer definierte Anzahl an Bildelementen (37) eingerichtet ist;
wobei zumindest nur ein Teilbereich (FoV) des Sensorbildes (FoR) ausgelesen wird; und
wobei der Teilbereich (FoV) des Sensorbildes veränderbar bzw. im Sensorbild einstellbar ausgebildet ist, **dadurch gekennzeichnet, dass** der Flugkörper (20) eingerichtet, ist eine Mehrzahl an Bildelementen (37) gemeinsam auszuwerten bzw. zusammenzuschalten, zur Erhöhung der Lichtempfindlichkeit bzw. Reduzierung der Integrationszeiten der Bildelemente (37); und
wobei das Zusammenschalten bzw. die gemeinsame Auswertung der Mehrzahl an Bildelementen (37) bei Unterschreiten einer definierten Zielentfernungsgrenze erfolgt

2. Flugkörper gemäß Anspruch 1, wobei das Zielobjekt unter Verwendung des 20 Teilbereichs (FoV) des Sensorbildes (FoR) erfasst wird.

3. Flugkörper gemäß einem der vorhergehenden Ansprüche, weiterhin ausweisend einen Drehratensensor (23) zur Bestimmung einer Relativbewegung des Flugkörpers (20), wobei der Drehratensensor (23) als ein MEMS-Sensor ausgebildet ist.

4. Flugkörper gemäß einem der vorhergehenden Ansprüche, wobei die Recheneinheit (32) eingerichtet ist, bei einem Zielverlust eine Relativbewegungsberechnung des Flugkörpers (20), insbesondere zwischen Zielobjekt und Flugkörper, zum Nachführen des Flugkörpers sowie zum Wiederauffinden des Zielobjektes vorzunehmen; und eingerichtet ist das Zielobjekt wiederaufzufinden durch Flugsteuerung des Flugkörpers unter Berücksichtigung der Relativbewegungsberechnung.

5. Flugkörper gemäß dem vorhergehenden Anspruch, wobei der Flugkörper (20) eingerichtet ist zum Wiederauffinden des Zielobjektes eine Änderung des Flugverhaltens vorzunehmen.

6. Flugkörper gemäß einem der vorhergehenden Ansprüche, wobei der Flugkörper (20) eingerichtet ist, umschaltbare bzw. ineinander überblendbare Lenkgesetze zur Trefffehlerminimierung bzw. zur Erhöhung der Wiederaufschaltwahrscheinlichkeit vorzusehen.

7. Flugkörper gemäß einem der vorhergehenden Ansprüche, wobei der Flugkörper (20) eingerichtet ist, im Falle des Zielverlustes den Teilbereich (FoV) des Sensorbildes (FoR) gemäß einem definierten Suchmuster zum Wiederauffinden des Zielobjektes zu variieren.

8. Flugkörper gemäß einem der vorhergehenden Ansprüche, wobei der Flugkörper (20) im Falle des Zielverlustes weiterhin eingerichtet ist eine Prädiktion einer geschätzten Zielobjektposition auszuführen, sowie eingerichtet ist eine Kurskorrektur basierend auf der Prädiktion zum Wiederauffinden des Zielobjektes vorzunehmen.

9. Verfahren (40) zum Tracking eines Zielobjektes eines Flugkörpers gemäß Anspruch 1,
aufweisend die Schritte:
Vorsehen (42) eines optischen Sensors, der in Bezug auf den Flugkörper unbeweglich ausgebildet ist; wobei der optische Sensor zur Ausbildung eines Sensorbildes (FoR) mit einer definierten Anzahl an Bildelementen eingerichtet ist; und
Auslesen (44) zumindest nur eines Teilbereichs (FoV) des Sensorbildes (FoR); wobei der Teilbereich des Sensorbildes veränderbar bzw. im Sensorbild einstellbar ausgebildet ist; und
Zusammenschalten bzw. die gemeinsame Auswertung der Mehrzahl an Bildelementen (37) bei Unterschreiten einer definierten Zielentfernungsgrenze.

## Claims

1. Missile (20) for transporting a payload, comprising
an optical sensor (21) for detecting and piloting towards a target object;
a flight drive unit (34) for influencing a trajectory of the missile; and
a computation unit (32) for image processing and flight control of the missile;
the optical sensor being formed stationary with respect to the missile;
the optical sensor being set up to form a sensor image (FoR) having a defined number of image elements (37);
at least only a sub-region (FoV) of the sensor image (FoR) being read out; and
the sub-region (FOV) of the sensor image being formed to be changeable or to be adjustable in the sensor image, **characterised in that**
the missile (20) is set up to evaluate jointly or to interconnect a plurality of image elements (37) so as to increase the light sensitivity or reduce the integration times of the image elements (37); and
the interconnection or joint evaluation of the plurality of image elements (37) takes place when a defined target distance limit is undershot.

2. Missile according to claim 1, wherein the target object is detected using the sub-region (FOV) of the sensor image (FoR) .

3. Missile according to any of the preceding claims, further comprising a rotation rate sensor (23) for determining a relative movement of the missile (20), the rotation rate sensor (23) being formed as a MEMS sensor.

4. Missile according to any of the preceding claims, wherein the computation unit (32) is set up to undertake a relative movement calculation on the missile (20), in particular between the target object and the missile, in the event of target loss so as to track the missile and to relocate the target object; and is set up to relocate the target object by flight control of the missile taking into account the relative movement calculation.

5. Missile according to the preceding claim, wherein the missile (20) is set up to undertake a change in the flight behaviour so as to relocate the target object.

6. Missile according to any of the preceding claims, wherein the missile (20) is set up to provide steering rules, which can be switched between or superposed on one another, for minimising striking errors or for increasing the probability of reconnection.

7. Missile according to any of the preceding claims, wherein the missile (20) is set up to vary the sub-region (FoV) of the sensor image (FoR) in accordance with a defined search pattern in the event of target loss so as to relocate the target object.

8. Missile according to any of the preceding claims, wherein the missile (20) is further set up to make a prediction of an estimated target object position in the event of target loss and is set up to undertake a course correction on the basis of the prediction so as to relocate the target object.

9. Method (40) for tracking a target object of a missile according to claim 1,
comprising the steps of:
providing (42) an optical sensor, which is formed stationary with respect to the missile; the optical sensor being set up to form a sensor image (FoR) having a defined number of image elements; and
reading out (44) at least only a sub-region (FoV) of the sensor image (FoR); the sub-region of the sensor image being formed to be changeable or to be adjustable in the sensor image; and
interconnecting or jointly evaluating the plurality of image elements (37) when a defined target distance limit is undershot.

## Revendications

1. Missile (20) pour le transport d'une charge utile, présentant :
un capteur optique (21) pour détecter un objet cible et se diriger vers lui ;
une unité de propulsion de vol (34) pour influencer une trajectoire du missile ; et
une unité de calcul (32) pour le traitement d'images et la commande de vol du missile ;
le capteur optique étant conçu immobile par rapport au missile ;
le capteur optique étant configuré pour former une image de capteur (FoR) ayant un nombre défini d'éléments d'image (37) ;
au moins seulement une zone partielle (FoV) de l'image de capteur (FoR) étant lue ; et
la zone partielle (FoV) de l'image de capteur étant conçue variable ou réglable dans l'image de capteur,
**caractérisé en ce que**
le missile (20) est configuré pour évaluer conjointement ou interconnecter une pluralité d'éléments d'image (37) pour augmenter la sensibilité à la lumière ou réduire les temps d'intégration des éléments d'image (37) ; et
l'interconnexion ou l'évaluation conjointe de la pluralité d'éléments d'image (37) ayant lieu quand une distance à la cible devient inférieure à une limite définie.

2. Missile selon la revendication 1, l'objet cible étant détecté en utilisant la zone partielle (FoV) de l'image de capteur (FoR).

3. Missile selon l'une des revendications précédentes, présentant en outre un capteur de lacet (23) pour déterminer un mouvement relatif du missile (20), le capteur de lacet (23) étant réalisé sous la forme d'un capteur MEMS.

4. Missile selon l'une des revendications précédentes, l'unité de calcul (32) étant configurée, en cas de perte de la cible, pour effectuer un calcul de mouvement relatif du missile (20), en particulier entre l'objet cible et le missile afin de faire suivre le missile et de retrouver l'objet cible ; et étant configurée pour retrouver l'objet cible par commande de vol du missile en tenant compte du calcul de mouvement relatif.

5. Missile selon la revendication précédente, le missile (20) étant configuré pour modifier le comportement en vol afin de retrouver l'objet cible.

6. Missile selon l'une des revendications précédentes, le missile (20) étant configuré pour prévoir des lois de guidage commutables ou à transition progressive pour minimiser les erreurs d'atteinte ou pour augmenter la probabilité de reverrouillage.

7. Missile selon l'une des revendications précédentes, le missile (20) étant configuré, en cas de perte de la cible, pour faire varier la zone partielle (FoV) de l'image de capteur (FoR) selon un schéma de recherche défini pour retrouver l'objet cible.

8. Missile selon l'une des revendications précédentes, le missile (20) étant en outre configuré, en cas de perte de la cible, pour exécuter une prédiction d'une position estimée de l'objet cible et pour effectuer une correction de cap sur la base de la prédiction pour retrouver l'objet cible.

9. Procédé (40) de poursuite d'un objet cible d'un missile selon la revendication 1,
comprenant les étapes consistant à :
prévoir (42) un capteur optique qui est conçu immobile par rapport au missile ; le capteur optique étant configuré pour former une image de capteur (FoR) ayant un nombre défini d'éléments d'image ; et
lire (44) au moins seulement une zone partielle (FoV) de l'image de capteur (FoR) ; la zone partielle de l'image de capteur étant conçue variable ou réglable dans l'image de capteur ; et
interconnecter ou évaluer conjointement la pluralité d'éléments d'image (37) quand une distance à la cible devient inférieure à une limite définie.
